# EUROPEAN PATENT APPLICATION

(11) **EP 1 931 124 A1**
(43) Date of publication of application: **11.06.2008**
(21) Application number: 06775250.1
(22) Date of filing: 31.07.2006
(51) Int. Cl.: H04M 11/08

(54) **AN INFORMATION SUBSCRIBING SYSTEM FOR PORTABLE TERMIANL DEVICE HAVING AUTONOMOUS NETWORK ACCESS**

(30) Priority: 22.09.2005 CN 200510029855
(71) Applicant: Shnghai Yee Networks Co., Ltd., Zhang Jiang Hi-Tech Park Shanghai 201-203 (CN)
(72) Inventor: ZHANG, Wenqi, Shanghai 201203 (CN); CHENG, Weimin, Shanghai 201203 (CN); FAN, Di, Shanghai 201203 (CN)
(74) Representative: Schwarze, Holm
(86) International application number: PCT/CN2006/001915
(87) International publication number: WO 2007/033566

(57) **Abstract**

An information subscribing system for portable terminal device (20) having direct network connecting function, wherein the terminal device (20) communicates with information distribution platform (1) and transmission protocol authorization control platform (2) via network (3), respectively, subscribes to and searches information to the information platform (1) through transmission protocol authorization platform (2). Based on the information distribution platform (1), high effective promulgation of multimedia information is therefore achieved by data interaction with portable terminal device (20) having direct network connecting function in the manner of distribution transmission for the electric network and the unique identity authorizing authentication, the terminal user can acquire multimedia effectively and conveniently, the present invention protects the copyright of multimedia information, prevents the phenomena of illegal copy, and realizes copyright protection.

## Description

### Field of the Invention:

The present invention relates to an information subscribing system, and more particularly to an information subscribing system for portable terminal devices having autonomous network access.

### Description of the Related Art

With the increasing popularity of using the wired or wireless networks, especially internet and/or 3G mobile communication networks, to communicating and exchanging all types of data and information, in the coming multimedia age, the network has become a huge vehicle for people use to obtaining various types of multimedia content, such as music, photo, videos, text files, games, and the like, However, it still has limitations in the use of multimedia over networks, such as:
1) Personal computer serves as a playback or an intermediary platform is one limiting factor The dimension, price, and power hungry of personal computer may limit it to be used only in the particular places of an environment, and unable to allow users to connect at anywhere anytime for access and play multimedia content.
2) The way for general electronic products to acquire multimedia resources is limited. To date a variety of multimedia players, such as MP3 players, could not connect directly to internet or other networks for easily obtain and store data or information, instead, typically involves using a computer as an intermediary repository for data exchange between these multimedia players and multimedia resources, which limits the usability of multimedia resources.
3) The lack of method for centralized multimedia content management has resulted in difficult inquiring for information, and the content provider is also lacking in essential marketing solutions for approach target consumer over the networks.
   The sources of multimedia information on the networks become more numerous, complex and diversified, as well as more difficult for consumer to search and obtain interested or desired multimedia information. Often, the consumer have to access a variety of sources of multimedia information, such as a website, to obtain relevant resources. In general, the downloading of multimedia information is performing a unidirectional transfer for receiving information that user have previously selected. While interacting with terminal device of user initially, content provider cannot present personalized information that may be of interests of the user.
4) The copyright protection of multimedia Information.
   The multimedia content piracy is a major problem for the industries, media content including fresh released music from record company, new movie from movie studio, audio book from production company and others. With the proliferation of illegal media content sharing and downloading on the networks, the copyright protection of multimedia content over the network is fundamentally important to these companies.

Therefore, there is possible to improve and facilitate transfer and playback of multimedia information across the network from following two directions.
1) A system can provide centralized management of integrated sources of multimedia information with efficient copyright protection methods. Such a system with a wired and/or wireless high-speed network connection could allow consumer to obtain multimedia information easily and faster.
2) A networked media player with ease of use that can playback various audio and video data formats, Such a device could allow consumer enjoy and playback multimedia content at any time and anywhere.

### SUMMARY OF THE INVENTION

To overcome some of the above noted problems, the present invention provides an information subscribing system for a portable terminal device having autonomous network access. The portable terminal device communicates to the transmission authentication control protocols platform in conjunction with the information distribution platform over a network connection, the transmission authentication control protocols platform can permit the portable terminal device to perform subscribing and searching for the information stored on the information distribution platform.

The portable terminal device embeds a hardware-based authentication chip including a cryptographic key generator, a rights management controller, a communication protocols module and a unique device identifier of the portable terminal device.

The transmission authentication control protocols platform identifies the portable terminal device by using the unique device identifier via the communication protocols to determine whether to authorize the portable terminal device to perform subscribe and search for the information stored on the information distribution platform.

The information distribution platform distributes and delivers the information to the portable terminal devices that have subscribed over the networks; the information distribution platform also stores a plurality of data, including the information subscribed currently and subscription history of the terminal devices.

The network can be Internet, local network, or mobile network.

The portable terminal device having autonomous network access can connect autonomously to the network without using a computer as an intermediary,

The advantages of the invention are numerous.
1) One advantage is to maximally protecting copyright of the multimedia content, and preventing illegal copy and distribution, The Identification and authentication controlled download method ensures the content on a networked information distribution platform can be legally downloaded to a portable terminal device having autonomous network access, which also enabled to control the transmission of network multimedia content by rights management within for against illegal copying and distributing.
2) Another advantage is to providing multimedia data services to end users with simple, instant, cost efficient and ease of use. The networked information distribution platform can provide centralized management of multimedia content of different sources, allowing users to easily obtain desired data. The portable terminal device having autonomous network access contains wired and wireless network interfaces complying with a variant of the WIFI, 3G, Ethernet, or any other protocols, which is capable to establish a direct network communication link autonomously without using a computing device as an intermediary, for instantly get connected to accessing online at virtually any time and any where, even can enable these lack of computer skills to acquire network multimedia subscription services. The portable terminal device having autonomous network access can be embodied as various kinds of device to extend the aspects of the network multimedia. For example, the portable terminal device can be a network multimedia docking station, which is capable to increase network multimedia download speed and make the downloading become simple and instant.
3) Still another advantage is to providing a direct communicate channel between content provider and end user. The central system server stores all the information and data including download records, etc, can examine and indicate what type of multimedia content maybe of interest to each user. With the permission of the user of terminal device user, the information distribution platform can enable the multimedia content provider to perform a pushing transfer action for presenting advertisement and/or multimedia content to the portable terminal device of the user based on associated user characteristics, automatic providing multimedia information therefore facilitate information distributing and possibly to perform two way interactions,
4) The present system also includes a purchasing service system with acceptable pricing, to ensuring the copyright loyalty payments to multimedia content providers are allocated. Though the multimedia networks and services, the system improves and extents the utilization of telecommunication and network.

### BRIEF DESCRIPTION OF THE DRAWINGS

FIG.1 is a block diagram of an information subscribing system in accordance with one embodiment of the invention;
FIG.2 is a block diagram of portable terminal device having autonomous network access in accordance with one embodiment of the invention;
FIG.3 illustrates an establishment of communicating between the terminal devices and information subscribing platform in accordance with one embodiment of the invention;
FIG.4 illustrates the Information and file management system of information subscribing platform in accordance with one embodiment of the invention;
FIG.5 illustrates the distributed transmission, and centralized identification and authentication management method for multimedia content in accordance with one embodiment of the invention;
FIG.6 illustrates an establishment of multimedia information data downloading in accordance with one embodiment of the invention;

### DETAILED DESCRIPTION OF THE INVENTION

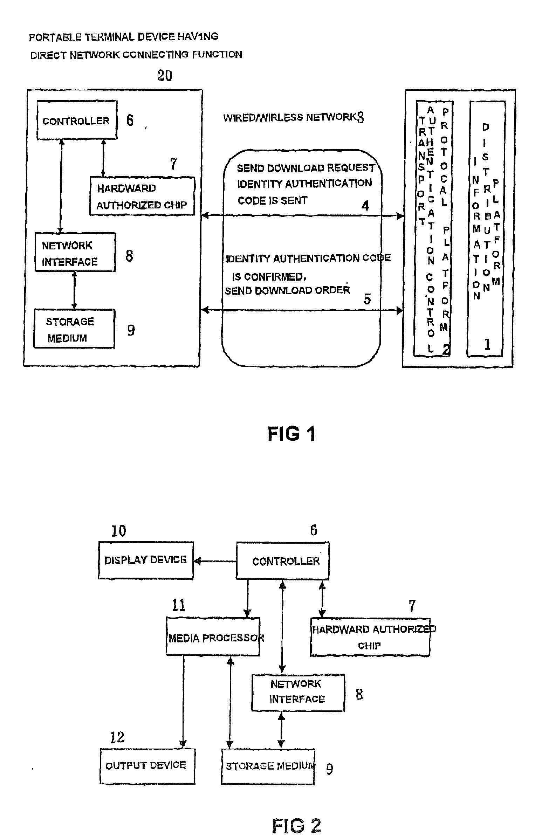

Referring to the FIG.1, 2, 3, 4, 5, 6, the present invention provides an information subscribing system for a portable terminal device having autonomous network access. The portable terminal device 20 communicates to the transmission authentication control protocols platform 2 in conjunction with the information distribution platform 1 over a wired and/or wireless network 3, the transmission authentication control protocols platform 2 can permit the portable terminal device to perform subscribing and searching for the information stored on the information distribution platform 1.

The referred portable terminal device 20 embeds a hardware-based authentication chip 7 including a cryptographic key generator, a rights management controller, a communication protocols module and a unique device identifier of the portable terminal device 20.

The referred transmission authentication control protocols platform 2 identifies the terminal device 20 by using the unique device identifier via the communication protocols to determine whether to permit the terminal device 20 to subscribe and search for the information stored on the information distribution platform 1,

The information distribution platform 1 distributes and delivers the information to the portable terminal devices 20 that have subscribed over the networks; the information distribution platform 1 also stores a plurality of data, including the historical subscription information and records of the terminal devices 20.

The network refers to the Internet, wired network, and wireless network.

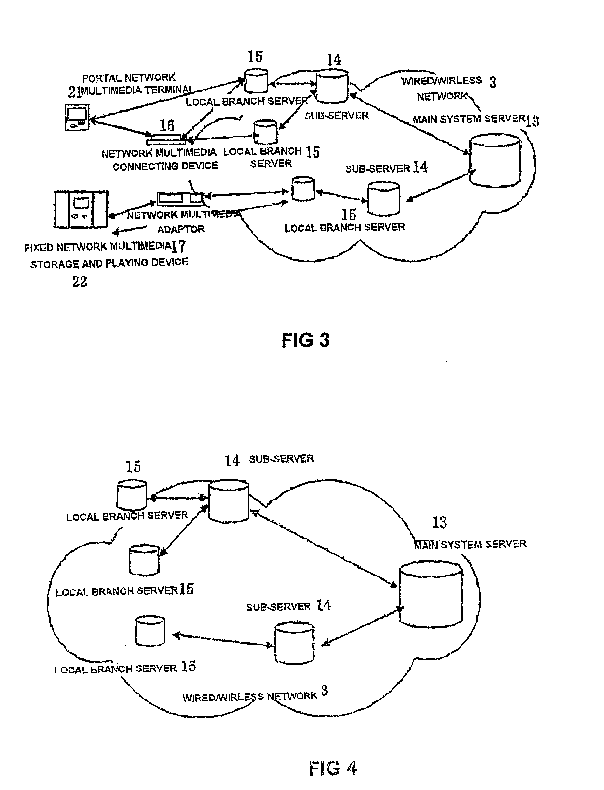

The portable terminal device 20 having autonomous network access that can connect directly to the network.
1. The information distribution platform 1 is placed on Internet/3G and other networks in form of a host server that stores or connects multimedia information data being provided by content providers, features including: multimedia information management (e.g., information storage, search), end users' personal information management system, information promotion system, Identification and authentication system, copyright loyalty payment management, system software maintenance and upgrade, it can also send multimedia information data to a specific and unique identified and authorized portable terminal device 20 having autonomous network access via internet/3G or other networks. Information distribution platform 1 features:
   1) Information and file management system (shown in FIG.4):
      The information and file management system includes a numerous capabilities, such as information storage, information search and etc.
         a) Information storage: as shown in FIG.4, the information distribution platform 1 has a hierarchical distributed storage structure. Since the host server 13 therein is centralized store a plurality of different types of media and information data, and for the users of portable terminal devices are capable of sending and receiving various types of media and information data with fast accessing speed at any location, the hierarchical distributed storage structure can include a plurality of sub-host servers 14 to providing more faster download speed to the users are nearby. Similarly, the sub-host server can also include a distributed network of sub-local servers,
         b) Information search: the information distribution platform 1 stores non duplicate information data that also be uniquely in system wide, the information distribution platform 1 utilizes various criterion to distinguish between new and existing information data to forming a new complete data list and storing each system wide uniquely information data into associated storage system by a specific organizing method for user to easy search. The criterion can be dependent upon a wide range of factors, for example, artist, album, or genre, etc.

      As a registered user send a download request of particular desired multimedia information to the information distribution platform 1. In response of the request, the information distribution platform 1 can search available multimedia information and present a set of multimedia information that is consistent with the user's request, then, the information distribution platform 1 can determine whether the transmission to the terminal device of the user could be performed immediately or in a deferred manner by automatically predetermined what type of network connection is being used when interacting with the terminal device of the user.
   2) User information management, and information distribution:
      The host server 13 stores the personal information of the registered user of authorized terminal device, such as name, address, phone number, etc. The host server 13 stores all the transmission records of the terminal devices associated with the user and also retain a multimedia file download list 18 for current terminal device associated with the user.

      The user can enter to review, edit and modify the multimedia file download list 18 for current device 20 remotely by a network connection, then the user can operate current associated device 20 to be synchronized with the multimedia file download list 18 for downloading the multimedia content and information thereafter is consistent with download list 18. Hence, it is possible for the user of terminal device to preset the download list 18 with desired multimedia file via a wireless network, which can be transferred and stored to the associated terminal device 20 in accordance with the multimedia file download list 18 when have a broadband network connection.
      Additionally, all the transmission records of the terminal devices associated with the user that stored on the host server 13 can be used to determine the preferences and interests of the user. Here, with the permission of the user of terminal device, the information distribution platform 1 can enable the multimedia content providers to presenting specially selected information and/or content to the portable terminal device of the user based on user preferences and interests,
   3) Identification and authentication system:
      Preventing illegal copy is the key for protects multimedia content data in transit across a network. Within this system, an Identification and authentication system can be established for implementation of rights and loyalty payments management between information distribution platform 1 and portable terminal device 20 having autonomous network access, as shown in FIG.1.

      Each portable terminal device 20 having autonomous network access contains a hardware-based authentication chip 7, for authorized download purposes, the authentication chip 7 can be provided with a plurality of authorized keys that generated by embedded cryptographic key generator. As the user sends a request for downloading, in the meantime, the authorized key is also required to be transmitted which can be validated and authenticated by the transmission authentication control protocols platform 2 using the appropriate license key, for ensure that only authorized user can perform a downloading. The authentication chip 7 also includes a rights management controller: Once the authentication chip 7 determines the information data being downloaded is coupled with rights control options, then determines whether the user of the device can copy and/or distribute and/or modify the media data in accordance with rights control options. The hardware-based authentication chip 7 consists of three major functional modules, cryptographic key generator, rights management controller, and communication protocols module.
      The cryptographic key generator includes a cryptography algorithm can real time generate a authorized key that would be transmitted to the transmission authentication control protocols platform 2 by the network interface 8 which complies the communication protocols.
      According to the received authorized key, the transmission authentication control protocols platform 2 using the appropriate license key that has been generated by associated cryptographic algorithm to perform a validation process to determine the download request can be approved, and delivery of media content according to the download request is performed by information distribution platform 1.
      The authorized key and license key is dynamically and uniquely generated by the hardware-based authentication chip 7 and the transmission authentication control protocols platform 2, it is highly confidential and non-reproduced for ensuring highly reliable work of the identification and authentication system.
      Once the information data is being downloaded which coupled with rights control options that can be detected by the rights management controller to notify and indicate the limited use of the downloaded information data for the limited use copyright can be controlled. The rights control options can be customized base on information data providers, thus it is highly flexible.
   4) Loyalty payments management:
      According to the data stored in the personal information management system of information distribution platform1, when the terminal device 20 established a network connection with the Information distribution platform1, the loyalty payment system pertains to the information distribution platform1 will be automatic started to record users' actions, like download, etc, and corresponding costs.
   5) Upgrade and maintenance of the system;

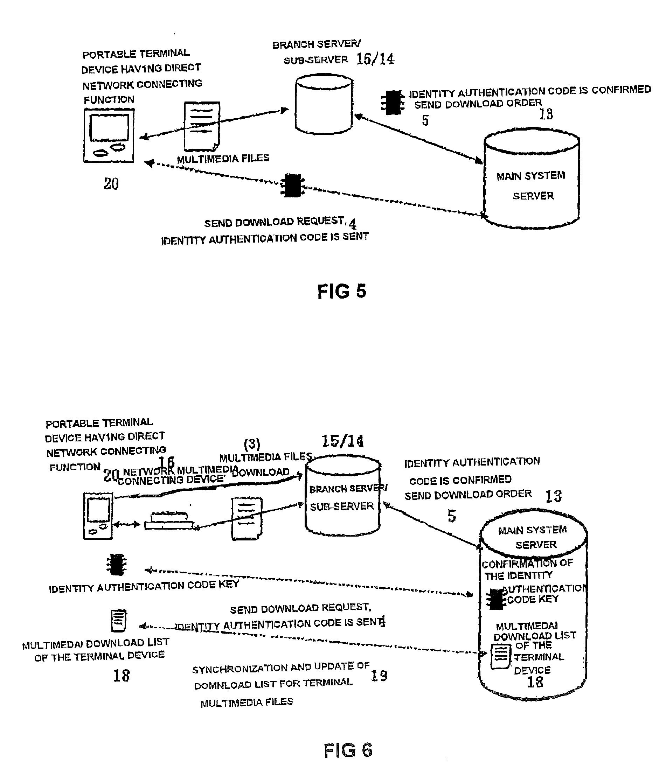

   After get a confirmation from the user of terminal device, the information distribution platform1 can automatically upgrade the software installed on the terminal device, for providing more services and multimedia information channels to the user, and also can repair the leaks of the system and protect the copyright,
2. Techniques for transmitting multimedia content over networks: for easy and high-speed multimedia transferring, and protecting the copyright of information data which is being transferred over a network, to preventing illegal copy is one of the key techniques for transferring multimedia over a network. The present system provides a distributed private network for transmitting data over a public network, an identification and authentication system can be established between the information distribution platform1 and the portable terminal device 20 having autonomous network access for performing a secure and paired data transmission to prevent illegal copy.
   1) Private transmission via a public network connection:
      For preventing illegal copy, the transmission of information and data between the information distribution platform1 and the portable terminal device 20 having autonomous network access which the information and data is privately transmitted. Further, the information distribution platform1 can deliver the particular multimedia content to the identified terminal device only. Every portable terminal device 20 with direct network accessing capability has a unique device identifier within, each time the terminal device 20 to be sent a transfer request, and also have to transmit associated device identifier 4 to the information distribution platform1 for verifying, and get identified, then the information distribution platform1 sends a confirmation for downloading, to retain the multimedia content can only be transferring across the specified networking environment; the portable terminal device 20 with direct network accessing capability can not be connected to a device or a like that is designated for illegal duplication via a network link, hence. A private network can maximally prevent illegal copy. The present system is capable to transmit multimedia content over any types of wireless and/or wired network. With its open structure for capable to rely on any type of public network.
   2) The distributed transmission network with the centralized identification and authentication management of multimedia content (illustrated in FIG.5):
      In order to provide convenient multimedia content services with high speed obtaining experience to most users. The present system using a hierarchical distributed network system architecture. The central system server acts as a host server 13, and for providing the users of portable terminal devices various media and information data services with fast accessing speed at any location, the hierarchical distributed storage structure includes a plurality of sub-host servers 14, similarly, the sub-host server can also include a distributed network of sub-local servers 15 for providing more faster download speed to the users are nearby.
      On user information management, the present system has a centralized identification and authentication management system to ensure the identification and authentication for each terminal device 20 is unique and secured. For example, user of the terminal device 20 can send a download request to the information distribution platform 1, and also have to transmit the device identifier of the terminal device to the host server 13 for determine whether the identifier from the terminal device associated with the user can be identified, such determination can be performed by the host server 13 only. A centralized identification and authentication management can maximally reduce and restrict any illegal actions. When the host server 13 identified the terminal device 20, then automatic couple with the most suitable sub-host server 14 and/or sub-local server 114 nearby, which can be allowed to deliver the multimedia content to the terminal device 20.
      In short, this is where said distributed transmission, centralized identification and authentication,
   3) Accessory devices for network downloading: includes a network multimedia docking station 16 and a network multimedia transceiver 17, etc.

   In one embodiment, a network multimedia docking station 16 is an accessory device can be used with the new portable networkable multimedia terminal device 21. The network multimedia docking station 16 has its own network interface for connect directly to the network for accessing and receiving multimedia and data documents via network multimedia and content services, thereafter, to establish a connection link with the new portable network multimedia terminal device 21 through a particular communication interface for transmitting various multimedia and data documents to the new portable network multimedia terminal device 21.
   In another embodiment, a network multimedia transceiver can provide network accessing ability for most electronic and media playback devices without network accessing capability, the network multimedia transceiver 17 has built in network interfaces for obtain various types of multimedia content and information data and store to its own storage medium, then, establish a network communication link with the multimedia players without network accessing capability, and possible to transmit the previous received and stored multimedia and data documents to the linked multimedia players without network accessing capability.
   To using these accessory devices can facilitate the operations of downloading multimedia on the network. The new portable multimedia terminal device 21 has option to download a file list first, and then, downloading of huge data can be done by the network multimedia docking station 16. In addition, the network multimedia docking station 16 can also be used to serve as a mobility "server" with a resource sharing software preinstalled, which can transmit the downloaded multimedia information data to another network multimedia docking station 16. Hence, some particular multimedia data may have a huge number of download requests be queued or being downloaded to the network multimedia docking station 16, as a noted mobility "server", which has a complete or a partial of the particular multimedia data can be performed to transmit the data already obtained to the desirable and coupled target devices within the network to ensuring the speed of each download process. The network multimedia transceiver 17 allows the multimedia playback devices without network connecting capability to receive multimedia information by the network connection.
3. The portable terminal device 20 having autonomous network access (as shown in FIG.2): for network multimedia services, the portable terminal device 20 having autonomous network access with a built in network interface 8, which to enable it to autonomously establish a wireless or wired network communication link with the online multimedia server for obtaining multimedia content and data, as well as to process a wide range of multimedia content and data stored on the internally multimedia storage for playback by media player.
   1) Controller 6: controls every functional module of the system of device, such as, display and power management, etc, also it implements the management of storage medium 9 and the operations of various network protocols to enable the system to connect storage medium 9 and access various type of networks, An open software structure of controller 6 is upgradable by network updating,
   2) Media processor 11: operates and processes various media file format, supports audio and video multimedia content, and the system can be upgraded by software updating to compatible with new multimedia file format and it also support online real time play and download-for-play.
   3) Hardware-based authentication chip 7: has a plurality of authorized keys generated by embedded cryptographic key generator. As the user sends a request for downloading, in the meantime, the authorized key is also required to be transmitted which can be validated and authenticated by the transmission authentication control protocols platform 2 using the appropriate license key; for ensure that only authorized user can perform a downloading. The authentication chip 7 also includes a rights management controller: Once the authentication chip 7 determines the information data being downloaded is coupled with rights control options, then determines whether the user of the device can copy and/or distribute and/or modify the media data in accordance with rights control options.
   4) Storage medium 9: a plurality types of IC memory chip, memory card or micro hard drive can be chosen for store downloaded media information data. And it is possible to download a large volume of media data by using large volume storage,
   5) Network interface 8: complies with various protocols of wireless and/or wired networks consisting WIFI, mobile communication networks and Ethernet, etc., for communicating over networks at anytime anywhere to enjoy network media content.
   6) Output interface 12: combined with audio and video playback interface can output the decoded and transcoded digital media stream for playing, it also can output to the compatible playback devices.
   7) Display device 10: the interface of display device 10 shows the Information, such as network downloading progress and communication connecting situation, for user-friendly.

   The following are features of the portable terminal device 20 having autonomous network access:
   1) Plug-and-connect network:
      For ease of use, the portable terminal device 20 having autonomous network access should be capable to autonomously establish a network communication link for accessing the network directly with a complete set of network communicating function. The autonomously network communication capability means, user just need to take the portable terminal device 20 into a networking environment, the portable terminal device 20 will autonomously implement the network communication protocol and network address info searching without any complex operations and settings, and to perform various operations, like, online play and download. For the terminal device of the user, which has the network accessing ability of "Plug & Play". Furthermore, the direct network accessing ability of the portable terminal device 20 could be coupled with any types of wired and/or wireless network allows the user to get connected at anywhere anytime.

      To achieve the autonomously network communication capability of the portable terminal device 20 having autonomous network access, two aspects of hardware and software design should be taken into consideration: about the hardware, the portable terminal device 20 having autonomous network access must be configured to comply with one or more network interfaces to meet different types of the physical link layer (PHY) and Media Application Layer (MAC) of various wired and wireless networks 3. Through the physical link layer (PHY) and Media Application Layer (MAC), the portable terminal device 20 having autonomous network access, can implement the bidirectional communication with wired and wireless network 3 at a hardware level, which is the basis for the network communications.
      On software: after the portable terminal device 20 having autonomous network access realizes the bidirectional communication with wired and wireless network 3 based on hardware level, by built-in network communication protocols, the portable terminal device 20 having autonomous network access is able to send relative operation commands of networking, to autonomously interacting with the multimedia sources, download and upload the information data packets. The portable terminal device 20 having autonomous network access is capable to recognize any types of network, and autonomously determine for using appropriate network protocol to continuously maintain a network communication link.
   2) Embeds hardware-based authentication chip 7:
      Hardware-based authentication chip 7 has a plurality of authorized keys generated by embedded cryptographic key generator, As the user sends a request for downloading, in the meantime, the authorized key is also required to be transmitted which can be validated and authenticated by the transmission authentication control protocols platform 2 using the appropriate license key, for ensure that only authorized user can perform a downloading. The authentication chip 7 also includes a rights management controller: Once the authentication chip 7 determines the information data being downloaded is coupled with rights control options, then determines whether the user of the device can copy and/or distribute and/or modify the media data in accordance with rights control options.
   3) The portable terminal device 20 having autonomous network access can be embodied as various kinds of device. Other embodiments, as shown in some figures, including the portable network multimedia terminal device 21, stationary network multimedia storage and playback device 22.

   The portable network multimedia terminal device 21 with a built in network interface enable it to autonomously establish a wireless or wired network communication link complying with a variant of the WIFI, 3G, Ethernet, or any other protocols for obtaining multimedia content and data file, as well as to process a wide range of multimedia content and data stored in the internally multimedia storage. And can be coupled with the network multimedia docking station 16.
   The stationary network multimedia storage and playback device 22 can be used in dance club, karaoke, bar, hotel, home and other fixed places for playback multimedia content. This stationary network multimedia storage and playback device 22 contains a network interface to enable it to autonomously establish a wireless or wired network communication link with network multimedia service provider to transmit high quality multimedia data and retain them on internal storage device with high capacity, and output for playback on the designated playback equipment via a digital audio/video output interface, or using preinstalled media player to playback.
4. An establishment of multimedia information data downloading (illustrated in FIG.6) according to one embodiment, to download multimedia content by a new multimedia information network system.
   1) Synchronize and update 19 multimedia files with download list of the terminal device: User can enter to review, edit and modify the multimedia file download list 18 for current device 20 remotely by a network connection, then the user can operate current associated device 20 to be synchronized with the multimedia file download list 18 for downloading the multimedia content and information thereafter is consistent with download list 18. Hence, it is possible for the user of terminal device to preset the download list 18 with desired multimedia file via a wireless network, which can be transferred and stored to the associated terminal device 20 in accordance with the multimedia file download list 18 when have a broadband network connection.
   2) Unique identification and authentication: Every time the terminal device 20 to sent a transfer request, and also have to transmit the device identifier of the terminal device to the host server 13 for determine whether the identifier from the terminal device associated with the user can be identified, such determination can be performed by the host server 13 only. A centralized identification and authentication management can maximally reduce and restrict any illegal actions. When the host server 13 identified the terminal device 20, then automatic couple with the most suitable sub-host server 14 and/or sub-local server 114 nearby to determine to deliver 5 the multimedia content to the terminal device 20.
   3) The download and transmission of multimedia content and data file: The sub-host server 14/sub-local server15 transmits the multimedia content to the portable terminal device 20 having autonomous network access. For example, to couple with network multimedia docking station 16 to establish a broadband network connection for receiving and retaining the multimedia content, thereafter, establish a communication link with the portable terminal device 20 having autonomous network access through a particular communication interface for transmitting various multimedia and data to the portable terminal device 20.

## Claims

1. An information subscribing system for portable device having direct network connecting capability, wherein said terminal device communicates with the information distribution platform and transport authentication control protocol platform respectively over the network, subscribes the information to the information distribution platform and searches the information in the information distribution platform by employing the transport authentication control protocol platform.

2. An information subscribing system for portable device having direct network connecting capability of claim 1, wherein said terminal device is configured with a hardware authorized chip comprising a password algorithm device, a copyright authorization device, communication protocol and the unique hardware serial number of the terminal device.

3. An information subscribing system for portable device having direct network connecting capability of claim 1, wherein said transport authentication control protocol platform authenticate the hardware serial numbers of the terminal device by employing the communication protocol, to determine whether to authorize the terminal device to subscribe and search the information from the information distribution platform.

4. An information subscribing system for portable device having direct network connecting capability of claim 1, wherein said information distribution platform distributes the information to the subscribed terminal devices over the network, and the information distribution platform is also configured to store subscription information and the subscriptions of historical record.

5. An information subscribing system for portable device having direct network connecting capability of claim 1, wherein said network refer to Internet; wired network; wireless network.

6. An information subscribing system for portable device having direct network connecting capability of claim 1 or 2, wherein said portable terminal device having directs digital network connecting capability can access the network initiatively.
